(19) **Europäisches Patentamt**
**European Patent Office**
**Office européen des brevets**

(11) **EP 2 586 835 B1**

(12) **EUROPEAN PATENT SPECIFICATION**

(45) Date of publication and mention
of the grant of the patent:
**21.08.2019 Bulletin 2019/34**

(51) Int Cl.:
***C09D 7/40*** *(2018.01)*

(21) Application number: **12177555.5**

(22) Date of filing: **24.07.2012**

(54) **Thickened aqueous dispersions and coated substrate provided therefrom**

Verdickte wässrige Dispersionen und beschichtetes Substrat daraus

Dispersions aqueuses épaissies et substrat revêtu obtenu à partir de celles-ci

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.08.2011 US 201161527153 P**

(43) Date of publication of application:
**01.05.2013 Bulletin 2013/18**

(73) Proprietor: **Rohm and Haas Company**
**Philadelphia, PA 19106 (US)**

(72) Inventors:
• **Donovan, Megan**
**North Wales, PA Pennsylvania 19454 (US)**
• **Nungesser, Edwin H.**
**Horsham, PA Pennsylvania 19044 (US)**
• **Maurice, Alvin M.**
**Lansdale, PA Pennsylvania 19446 (US)**
• **Zhang, Wei**
**Maple Glen, PA Pennsylvania 19002 (US)**

(74) Representative: **Houghton, Mark Phillip et al**
**Patent Outsourcing Limited**
**1 King Street**
**Bakewell, Derbyshire DE45 1DZ (GB)**

(56) References cited:
**EP-A1- 1 754 729     EP-A1- 1 754 730**
**EP-A1- 2 338 613     EP-A2- 0 257 567**

• **OLAS KOHUT-SVELKO1, ROSANGELA PIRRI2, JOSÉ M. ASUA1, JOSE R. LEIZA: "Redox initiator systems for emulsion polymerization of acrylates", JOURNAL OF POLYMER SCIENCE PART A: POLYMER CHEMISTRY, vol. 47, no. 11, 22 April 2009 (2009-04-22), pages 2917-2927, XP002693939, DOI: 10.1002/pola.23362**

**Description**

This invention relates to thickened aqueous dispersions of certain large polymeric particles. More particularly, this invention relates to an aqueous composition including: a particulate polymer having a particle diameter of from 0.7 microns to 100 microns, the polymer comprising, as copolymerized units, from 0.1% to 50%, by weight based on polymer weight, monomer having a Hansch parameter of from 2.5 to 10, the polymer having been formed in the presence of a non-formaldehyde reductant; and from 0.1% to 5%, by weight based on polymer weight, thickener. This invention also relates to a method for providing a coating on a substrate and the coated substrate so provided.

Stabilizing large particle polymers from sedimentation and separation in an aqueous mixture is difficult due to concepts included in Stokes law (Introduction to Fluid Dynamics, Cambridge University press, GK Batchelor (1967)):

$$F_d = -6\pi\, \mu\, RV_s\,,$$

where:

- $F_d$ is the frictional force acting on the interface between the fluid and the spherical particle (N),
- $\mu$ is the dynamic viscosity of the fluid containing large spherical particle polymers (N s/m$^2$)
- $R$ is the radius of the spherical object (m), and
- $V_s$ is the settling velocity of a spherical particle (m/s).

When spherical particles settle in a viscous fluid due to gravity influence on the mass of the particle, then a settling velocity is achieved when the forces due to friction combined with the buoyancy forces balance the gravitational forces. The settling velocity is given by:

$$V_s = \frac{2}{9}\, \frac{(P_p - P_f)}{\mu}\, g\, R^2$$

where:

- $V_s$ is the particle settling velocity (m/s)
- $g$ is the gravitational acceleration (m/s$^2$),
- $P_p$ is the particle mass density (kg/m$^3$), and
- $P_f$ is the fluid mass density (kg/m$^3$).

In other words Vs is proportional to the size of the particle and inversely proportional to the viscosity of the fluid.

The settling velocity of a particle of a given size can be reduced by increasing the viscosity of a fluid. Within narrow polymer compositions and particle size ranges, particles generally exhibit a similar viscosity when formulated similarly using thickeners or rheology modifiers.

European patent application EP 1,754,730 A1 discloses an aqueous dispersion of polymeric particles that comprises a first polymer comprising, as polymerized units, at least one monoethylenically unsaturated monomer and at least one multi-ethylenically unsaturated monomer, and when dry, at least one void, and at least one second polymer comprising, as polymerized units, at least one ethylenically unsaturated monomer, the second polymer substantially encapsulating the first polymer.

European patent application EP 2,338,613 A1 discloses a multilayer coating system comprising a layer of base coating which provides optical appearance on a substrate and a layer of clear top coating which provides surface protection and mechanical properties.

U.S. Patent No. 7,829,626 discloses matte coatings for leather including a binder component and certain copolymer duller particles having an average diameter of 1-20 microns.

The present invention, in its various aspects, is as set out in the accompanying claims.

In a first aspect of the present invention there is provided an aqueous composition comprising: a particulate polymer having a particle diameter of from 0.7 microns to 100 microns, said particle diameter being measured using a Disc Centrifuge Photosedimentometer relative to a polystyrene calibration standard for particle diameters of from 0.5 microns to 30 microns or using a Coulter counter for particle diameters of from greater than 30 microns to 150 microns, said polymer comprising, as copolymerized units, from 0.1% to 50%, by weight based on polymer weight, monomer having a Hansch parameter of from 2.5 to 10, said polymer having been formed in the presence of a non-formaldehyde reductant; and from 0.1% to 5%, by weight based on polymer weight, thickener.

In a second aspect of the present invention there is provided a method for providing a coated substrate comprising; (a) forming the aqueous composition of the first aspect of the present invention; (b) applying said aqueous composition to a substrate; and (c) drying, or allowing to dry, said applied aqueous composition.

In a third aspect of the present invention there is provided a coated substrate formed by the method of the second aspect of the present invention.

The aqueous polymeric coating composition of the present invention includes a particulate polymer having a particle diameter of from 0.7 microns to 100 microns, the polymer including, as copolymerized units, from 0.1% to 50%, by weight based on polymer weight, monomer having a Hansch parameter of from 2.5 to 10. By "aqueous composition" herein is meant a composition in which the continuous phase is predominantly water; water-miscible compounds may also be present, preferred is water.

The particulate polymer having a particle diameter of from 0.7 microns to 100 microns may be formed by methods known in the art such as, for example emulsion polymerization, seeded growth processes, and suspension polymerization processes. Such polymers are described, for example, in US Patent Nos. 4,403,003; 7,768,602; and 7,829,626, and also exemplified herein. The polymer may be may be made in a single stage process, a multiple step process such as a core/shell process that may result in a multiphase particle or in a particle in which the phases co-mingle for a gradient of composition throughout the particle, or in a gradient process in which the composition is varied during one or more stages.

The particulate polymer includes, as copolymerized units, from 0.1% to 50%, preferably from 0.2% to 25%, more preferably from 0.3% to 10%, and most preferably from 0.3% to 1%, by weight based on polymer weight, monomer having a Hansch parameter of from 2.5 to 10, preferably of from 2.5 to 7.0. For the specific monomers in Table 1, the Hansch parameter to be used herein is the following:

Table 1. Hansch parameters

| Monomer | Hansch parameter |
| --- | --- |
| Acrylamide | -0.81 |
| Itaconic Acid | -0.34 |
| Acrylonitrile | 0.21 |
| Acetoactyloxyethyl Methacrylate | 0.24 |
| Hydroxyethyl Methacrylate | 0.30 |
| Acrylic Acid | 0.44 |
| Methyl Acrylate | 0.73 |
| Vinyl Acetate | 0.73 |
| Methacrylic Acid | 0.99 |
| Dimethylaminoethyl Methacrylate | 0.97 |
| Ethyl Acrylate | 1.22 |
| Methyl Methacrylate | 1.28 |
| Ethyl Methacrylate | 1.77 |
| Allyl Methacrylate | 2.12 |
| Butyl Acrylate | 2.20 |
| Isobutyl Methacrylate | 2.67 |
| Butyl Methacrylate | 2.75 |
| Styrene | 2.89 |
| Alpha-Methyl Styrene | 3.44 |
| 2-Ethylhexyl Acrylate | 4.09 |
| 2-Ethylhexyl Methacrylate | 4.64 |
| iso-Bornyl Methacrylate | 4.76 |
| Lauryl Acrylate | 6.13 |
| Lauryl Methacrylate | 6.68 |
| Stearyl Methacrylate | 9.62 |

The Hansch parameters presented above were calculated from the US EPA Kowwin software and values for monomers not presented in Table 1 may be so calculated. Alternatively, the Hansch parameter for monomers not presented in Table 1 may be calculated using a group contribution method as disclosed in Hansch and Fujita, J. Amer. Chem. Soc., 86, 1616-1626 (1964); H. Kubinyi, Methods and Principles of Medicinal Chemistry, Volume 1, R. Mannhold et al., Eds., VCH, Weinheim (1993); C. Hansch and A. Leo, Substituent Constants for Correlation Analysis in Chemistry and Biology, Wiley, New York (1979); and C. Hansch, P. Maloney, T. Fujita, and R. Muir, Nature, 194. 178-180 (1962).

The particulate polymer includes, as copolymerized units, in addition to at least one monomer having a Hansch parameter of from 2.5 to 10, ethylenically unsaturated monomer such as, for example, a (meth)acrylic ester monomer including methyl (meth)acrylate, ethyl (meth)acrylate, butyl acrylate, hydroxyethyl (meth)acrylate, hydroxypropyl (meth)acrylate, ureido-functional (meth)acrylates and acetoacetates, acetamides or cyanoacetates of (meth)acrylic acid; vinyl acetate or other vinyl esters; vinyl monomers such as vinyl chloride, vinylidene chloride, and N-vinyl pyrollidone; (meth)acrylonitrile; and N-alkylol (meth)acrylamide. The use of the term "(meth)" followed by another term such as (meth)acrylate or (meth)acrylamide, as used throughout the disclosure, refers to both acrylates or acrylamides and methacrylates and methacrylamides, respectively. In certain embodiments the particulate polymer includes a copolymerized multi-ethylenically unsaturated monomer such as, for example, allyl (meth)acrylate, diallyl phthalate, 1,4-butylene glycol di(meth)acrylate, 1,2-ethylene glycol di(meth)acrylate, 1,6-hexanediol di(meth)acrylate, and divinyl benzene. In certain embodiments the particulate polymer includes a copolymerized acid monomer including carboxylic acid monomers such as, for example, acrylic acid, methacrylic acid, crotonic acid, itaconic acid, fumaric acid, maleic acid, monomethyl itaconate, monomethyl fumarate, monobutyl fumarate, and maleic anhydride; and sulfur- and phosphorous-containing acid monomers. Preferred acid monomers are carboxylic acid monomers. More preferred monomers are (meth)acrylic acid.

The calculated glass transition temperature ("Tg") of the particulate polymer is from -60°C to 150°C. When the particulate polymer includes more than one composition such as a multiphase polymer, a multistage polymer, or the like, the calculated Tg is taken as the Tg of the overall composition without regard for the number of separate compositions therein. Tgs of the polymers herein are calculated herein by using the Fox equation (T.G. Fox, Bull. Am. Physics Soc., Volume 1, Issue No. 3, page 123(1956)). that is, for calculating the Tg of a copolymer of monomers M1 and M2,

$$1/Tg(calc.) = w(M1)/Tg(M1) + w(M2)/Tg(M2)$$

,

wherein

Tg(calc.) is the glass transition temperature calculated for the copolymer
w(M1) is the weight fraction of monomer M1 in the copolymer
w(M2) is the weight fraction of monomer M2 in the copolymer
Tg(M1) is the glass transition temperature of the homopolymer of M1
Tg(M2) is the glass transition temperature of the homopolymer of M2, all temperatures being in °K.

The glass transition temperature of homopolymers may be found, for example, in "Polymer Handbook", edited by J. Brandrup and E.H. Immergut, Interscience Publishers.

In the formation of the particulate polymer conventional surfactants may be used such as, for example, anionic and/or nonionic emulsifiers such as, for example, alkali metal or ammonium alkyl sulfates, alkyl benzene sulfonates, alkyl sulfonic acids, fatty acids, and oxyethylated alkyl phenols. The amount of surfactant used is usually 0.1% to 6% by weight, based on the weight of total monomer. Conventional free radical initiators may be used such as, for example, hydrogen peroxide, t-butyl hydroperoxide, t-amyl hydroperoxide, t-butylperoxy-2-ethyl hexanoate, ammonium and/or alkali persulfates, typically at a level of 0.01% to 3.0% by weight, based on the total monomer weight. Such initiators coupled with, as reductant or activator, a non-formaldehyde reductant, are used in the formation of the particulate polymer, optionally in combination with metal ions such as, for example iron and copper, optionally further including complexing agents for the metal. By "polymer having been formed in the presence of a non-formaldehyde reductant" is meant herein that the reductant is added to the reaction zone before, during, or after the addition of the monomer that is being converted to the particulate polymer and that other classes of reductant are absent during the reaction. By "non-formaldehyde reductant" herein is meant that the reducing agent does not contain formaldehyde or release formaldehyde under reaction conditions except for an amount of from 0% to 0.01% by weight formaldehyde based on total monomer weight. Non-formaldehyde reductants include, for example, the reductants: isoascorbic acid, sodium metabisulfite, sodium hydrosulfite, and BRUGGOLITE™ FF6 (a sodium salt of an organic sulfinic acid derivative). Preferred as non-formaldehyde reductant is from 0.01% to 0.5%, by weight based on total monomer weight, isoascorbic acid.

The monomer mixture for the particulate polymer or for a stage thereof may be added neat or as an emulsion in water. The monomer mixture for the particulate polymer or for a stage thereof may be added in a single addition or more additions or continuously over the reaction period allotted for that stage using a uniform or varying composition. Additional ingredients such as, for example, preformed emulsion polymers also known as seed polymer, free radical initiators, oxidants, reducing agents, chain transfer agents, neutralizers, surfactants, and dispersants may be added prior to, during, or subsequent to any of the stages.

The aqueous composition of the present invention also includes from 0.1% to 5% by weight based on polymer weight, thickener. The thickener is selected from associative, partially associative, and non-associative thickeners, and mixtures thereof, in an amount sufficient to increase the viscosity of the aqueous composition. Suitable non-associative thickeners include water-soluble/water-swellable thickeners and associative thickeners. Suitable non-associative, watersoluble/water-swellable thickeners include polyvinyl alcohol (PVA), alkali soluble or alkali swellable emulsions known in the art as ASE emulsions, and cellulosic thickeners such as hydroxyalkyl celluloses including hydroxymethyl cellulose, hydroxyethyl cellulose and 2-hydroxypropyl cellulose, sodium carboxymethyl cellulose (SCMC), sodium carboxymethyl cellulose, 2-hydroxyethyl cellulose, 2 hydroxypropyl methyl cellulose, 2-hydroxyethyl methyl cellulose, 2-hydroxybutyl methyl cellulose, 2-hydroxyethyl ethyl cellulose,; starches, modified starches, and the like. Suitable non-associative thickeners include inorganic thickeners such as fumed silica, clays (such as attapugite, bentonite, laponite), titanates and the like. Suitable partially associative thickeners include hydrophobically-modified, alkalisoluble emulsions known in the art as HASE emulsions, hydrophobically-modified cellulosics such as hydrophobically-modified hydroxyethyl cellulose, hydrophobically-modified polyacrylamides, and the like. Associative thickeners include hydrophobically-modified ethylene oxide-urethane polymers known in the art as HEUR thickeners.

The particulate polymers having a particle diameter of from 0.7 microns to 100 microns, preferably from 0.7 microns to 50 microns, and most preferably from 0.8 microns to 20 microns, are useful, for example, as matting agents and feel modifiers for coating formulations. In many cases the large spherical particles are manufactured in a location that is different from the location of the final coating formulation. In other cases the final formulation is made at the same location of the large spherical particle but not in a timely fashion. Such strategies require storage of the large spherical particles until ready for final formulation. In either of these cases it is necessary to stabilize the large spherical particle so that it can be shipped to another location or it can be stored until a later date. This typically requires adding a thickening agent to the large spherical particles at its point of manufacture. In many cases the stabilization thickener is not beneficial to the final coating formulation and it is desirable to minimize the quantity of thickener used to stabilize the large spherical particle so as to reduce negative consequences of the stabilizing thickener in the final coating formulation.

The aqueous composition of the present invention is prepared by techniques which are well known in the coatings art. First, pigment(s),inorganic or organic, extenders, etc., if desired, are well dispersed in an aqueous medium under high shear such as is afforded by a COWLES (R) mixer or predispersed pigments, colorant(s), or mixtures thereof are used. The particulate polymer is added under low shear stirring along with other coatings adjuvants, if desired. The aqueous composition may contain, in addition to the particulate polymer and thickener, film-forming or non-film-forming solution, dispersion, or emulsion polymers in an amount of 0% to 500% by weight based on the weight of the particulate polymer, such as, for example, an emulsion polymer or a polyurethane dispersion having a calculated Tg of from -60°C to 150°C and a particle diameter of from 50 nm to 490 nm. Additionally, conventional coatings adjuvants such as, for example, emulsifiers, coalescing agents, plasticizers, antifreezes, curing agents, buffers, neutralizers, humectants, wetting agents, biocides, antifoaming agents, UV absorbers, fluorescent brighteners, light or heat stabilizers, chelating agents, dispersants, colorants, waxes, mineral extenders, water-repellants, and anti-oxidants may be added. In certain embodiments a photosensitive compound such as, for example, benzophenone or a substituted acetophenone or benzophenone derivative as is taught in US Patent No. 5,162,415 may be added. In certain embodiments the aqueous coating composition of the invention has a VOC (volatile organic compound) level of 150 or less g/liter of coating, alternatively of 100g/liter or less, or further alternatively of from 0 g/liter to 50 g/liter or less.

The solids content of the aqueous coating composition may be from 10% to 70% by volume. The viscosity of the aqueous coating composition may be from 50 mp-s to 50,000 mp-s, as measured using a Brookfield viscometer; viscosities appropriate for different application methods vary considerably.

The aqueous coating composition is typically applied to a transparent, translucent, opaque, or pigmented substrate such as, for example, wood, metal, plastics, leather, glass, woven or nonwoven textiles, plaster, drywall, cementitious substrates such as, for example, concrete, stucco, and mortar, previously painted or primed surfaces, and weathered surfaces. The aqueous coating composition may be applied to a substrate using conventional coatings application methods such as, for example, brush, paint roller, curtain coater and spraying methods such as, for example, air-atomized spray, air-assisted spray, airless spray, high volume low pressure spray, and air-assisted airless spray.

Drying of the aqueous coating composition may be allowed to proceed under ambient conditions such as, for example, at 5 °C to 35 °C. or the coating may be dried at elevated temperatures such as, for example, from 35 °C to 150 °C.

<div align="center">Abbreviations</div>

| | |
|---|---|
| Butyl acrylate | BA |
| Allyl methacrylate | ALMA |
| Methyl methacrylate | MMA |

(continued)

| Methacrylic acid | MAA |
| Isoascorbic acid | IAA |
| Sodium sulfoxylate formaldehyde | SSF |
| DI water = deionized water | |

TEST METHODS:

Sample viscosity: 200 ml of each mixture was transferred to an 8 ounce graduated, wide mouth glass container (EMSCO cat#GLS00846). Determination of Brookfield viscosity (units of millipascal second) was made using a Brookfield viscometer (Model DV-I, Brookfield Engineering). Two viscosity points were determined using spindle number 1 or 2 at rotation rates of 3RPM and 12RPM. After equilibrating mixture for 16 hours, viscosity measurements were made at ambient temperature (23-26°C) after mixing by hand (for 20 seconds) using a wooden tongue depressor.

Heat age ("HA") testing: The 8ounce glass containers were stored in a 60°C oven for 10days (un-disturbed). After 10 days the samples were removed from the oven, allowed to cool to ambient temperature (23-26°C) and were assessed for syneresis and sedimentation.

Syneresis assessment: Syneresis is a separation between the aqueous and polymeric part of an emulsion and is indicated by the formation of a clear or a translucent layer on the top of the emulsion. The separation layer was measured in cm of layer at the top/cm of total mixture in the container.

Sedimentation and hard packing: Prior to mixing the emulsion after heat aging, the bottom of the container was probed to determine the amount and type of sediment present. We noted the extent of sediment and the type of sediment (i.e soft pack or hard pack). For this assessment we used a rating scale of 1 to 5. A rating of 5 indicates no sedimentation was present in the mixture and a rating of 1 indicates significant sedimentation was found and that the sediment was hard packed.

Measurement of Particle size. Particle diameters of from 0.5 microns to 30 microns herein are those measured using a Disc Centrifuge Photosedimentometer ("DCP") (CPS Instruments, Inc.) that separates modes by centrifugation and sedimentation through a sucrose gradient. The samples were prepared by adding 1-2 drops into 10 $cm^3$ DI water containing 0.1% sodium lauryl sulfate. 0.1 $cm^3$ of the sample was injected into the spinning disc filled with 15 $cm^3$. sucrose gradient. Samples were analyzed relative to a polystyrene calibration standard. Specific conditions were: sucrose gradient 2-8%; disc speed 10,000 rpm; calibration standard was 895 nm diameter polystyrene.

Particle diameters of from greater than 30 microns to 150 microns herein are those measured using a Coulter counter (Beckman Coulter Multisizer 3 or 4). A 30-50 mg sample was diluted in 8-10 ml. DI water. 3-6 drops of the diluted sample were added to 175 ml of Isotone II solution. The aperture was selected based on the particle diameter, generally from 2-60% of the particle diameter Sample a. Formation of seed polymer for use in preparing particulate polymer

Unless otherwise noted, the terms "charged" or "added" indicate addition of all the mixture at once. The following mixtures were prepared:

Table a.1 Reaction mixtures used in Sample a synthesis.

| Mixture | Component | Parts By Weight |
|---|---|---|
| A | Water | 208 |
| | Sodium Carbonate | 0.38 |
| B | BA | 98 |
| | Butylene Glycol Diacrylate | 0.25 |
| | ALMA | 2.0 |
| | 10% aqueous Sodium Dodecylbenzenesulfonate | 4.0 |
| | Water | 40 |
| C | Potassium Persulfate | 0.063 |
| | Water | 35 |

A reactor equipped with stirrer and condenser and blanketed with nitrogen was charged with Mixture A and heated to 82°C. To the reactor contents was added 15% of Mixture B and 25% of Mixture C. The temperature was maintained at 82°C and the reaction mixture was stirred for 1 hour, after which the remaining Mixture B and Mixture C were metered in to the reactor, with stirring, over a period of 90 minutes. Stirring was continued at 82 °C for 2 hours, after which the reactor contents were cooled to room temperature. The average diameter of the resulting emulsion particles was 0.2 micron, as measured by light scattering using a BI-90 Plus instrument from Brookhaven Instruments Company, 750 Blue Point Road, Holtsville, NY 11742.

Sample b. Formation of seed polymer for use in preparing particulate polymer

Table b.1 Reaction mixtures used in Sample b synthesis

| Material | Charges Wt. (g) | % Active | Solids Wt. (g) | % Active BOM |
|---|---|---|---|---|
| Kettle Charge: | | | | |
| DI Water | 7425.0 | | | |
| Buffer | | | | |
| Sodium Carbonate | 3.9 | 100.0% | 3.9 | 0.08% |
| DI Water | 100.0 | | | |
| DI Water Rinse | 35.0 | | | |
| Kettle Additive | | | | |
| 50% Methyl-β- | 97.7 | 50.0% | 48.8 | 1.01% |
| DI Water Rinse | 45.0 | | | |
| Seed | | | | |
| Seed from example 1 | 266.4 | 46.0% | 122.5 | 2.53% |
| DI Water Rinse | 315.0 | | | |
| Initial Catalyst | | | | |
| Ammonium Persulfate | 4.9 | 100.0% | | 0.10% |
| DI water | 50 | | | |
| Kettle Catalyst | | | | |
| Ammonium Persulfate | 4.9 | 100.0% | 4.9 | 0.10% |
| DI Water | 100 | | | |
| Co-feed Catalyst | | | | |
| Ammonium Persulfate | 9.9 | 100.0% | 9.9 | 0.20% |
| DI Water | 450 | | | |
| Monomer Emulsion | | | | |
| DI Water | 1075.5 | | | |
| Sodium Dodecylbenzenesulfonate (23%) | 86.0 | 23.0% | 19.8 | 0.41% |
| BA | 3969.0 | 100.0% | 3969.0 | 81.8% |
| MMA | 873.0 | 100.0% | 873.0 | 18.0% |
| MAA | 9.9 | 100.0% | 9.9 | 0.2% |
| n-DDM Emulsion | | | | |
| DI Water | 1236.7 | | | |
| Sodium Dodecylbenzenesulfonate (23%) | 42.2 | 23.0% | 9.7 | 0.20% |
| n-DDM | 1067.4 | 100.0% | 1067.4 | 22.0% |

(continued)

| End Of Feeds Rinses | | | | |
|---|---|---|---|---|
| DI Water (ME) | 180.0 | | | |
| DI Water (n-DDM) | 225.0 | | | |
| DI Water (Co-feed | 45.0 | | | |
| Chaser Promoter | | | | |
| FeSO4.7H2O | 0.26 | 100.00% | 0.3 | 0.005% |
| Versene | 0.36 | 100.00% | 0.7 | 0.015% |
| DI water | 45.0 | | | |
| DI water Rinse | 25.7 | | | |
| Chaser Catalyst #1 | | | | |
| Ammonium Persulfate | 1.53 | 100.0% | 1.5 | 0.03% |
| DI water | 67.5 | | | |
| DI water Rinse | 25.7 | | | |
| Chaser Activator #1 | | | | |
| SSF | 0.95 | 100.0% | 1.0 | 0.02% |
| DI water | 67.5 | | | |
| DI water Rinse | 25.7 | | | |
| Chaser Catalyst #2 | | | | |
| Ammonium Persulfate | 1.53 | 100.0% | 1.5 | 0.03% |
| DI water | 67.5 | | | |
| DI water Rinse | 25.7 | | | |
| Chaser Activator #2 | | | | |
| SSF | 0.95 | 100.0% | 1.0 | 0.02% |
| DI water | 67.5 | | | |
| DI water Rinse 25.7 | | | | |
| Chaser Catalyst #3 | | | | |
| Ammonium Persulfate | 1.53 | 70.0% | 1.1 | 0.02% |
| DI water 67.5 | | | | |
| DI water Rinse | 25.7 | | | |
| Chaser Activator #3 | | | | |
| SSF | 0.95 | 100.0% | 1.0 | 0.02% |
| DI water | 67.5 | | | |
| DI water Rinse | 25.7 | | | |

Procedure:

Monomer Emulsion Preparation

Weighed and added the DI water to the emulsion tank. Turned on emulsion tank agitator. Weighed and added the DS-4 to the emulsion tank and agitated for 2 min. Added BA. Added MMA. Added MAA. Agitated for 5 min. Checked for stable ME.

n-DDM Emulsion Preparation

In order to get a stable n-DDM emulsion it is necessary to shear the emulsion to very small droplets using a high speed mixer.

Charged 1236.7 g of DI water to a 3.8 liter (one gallon) container. Charged 42.23 g of sodium dodecylbenzenesulfonate (23%) and 1067.4 g of n-DDM to the container in that order. Agitated the mixture until the mixture became very thick and creamy.

Kettle Preparation :

Charged the kettle water to the reactor and heated to 88-90 °C. Started agitation and began a 30 min. nitrogen sparge. After 30 min turned off nitrogen sparge. Added buffer. Added kettle additive. Added kettle catalyst. Added Seed. With the kettle at 83-87 °C fed the ME over 240 minutes. Fed the n-DDM emulsion over 235 minutes. Fed the co-feed catalyst over 240 minutes. Controlled the temperature at 83-87 °C during feeds. When the n-DDM emulsion addition was complete, fed rinse over 5 min. When the ME and co-feed catalyst were complete, added rinses. Held the reactor at 83-87 °C for 15 min. Cooled to 70 °C. Added chaser promoter and held 15 min. Added chase I and held 15 min at 70 °C. Added chase II and held 15 min at 70 °C. Added chase III and held 15 min at 70 °C. Cooled to 40 C and filtered.

SAMPLE A. Formation of particulate polymer

Table A.1. Mixtures used in formation of Sample A

| Material | Charges Wt. (g) | % Active | Solids Wt. | % Active BOM |
|---|---|---|---|---|
| Kettle Charge: | | | | |
| DI Water | 7618 | | | |
| Seed | | | | |
| Oligomer seed Sample b | 66.5 | 33.0% | | 0.41% |
| DI Water (rinse) | 146.3 | | | |
| Monomer Emulsion I | | | | |
| Deionized Water | 2071.9 | | | |
| Sodium Dodecylbenzensulfonate (23%) | 80.8 | 23.0% | 18.6 | 0.35% |
| BA | 5113.0 | 100.0% | 5113.0 | 95.5% |
| $\alpha$-Methylstyrene | 26.8 | 100.0% | 26.8 | 0.5% |
| ALMA | 214.2 | 100.0% | 214.2 | 4.0% |
| DI Water Rinse | 130.0 | | | |
| Initiator Emulsion | | | | |
| DI Water | 53.7 | 100.0% | | |
| Sodium Dodecylbenzensulfonate (23%) | 1.10 | 23.0% | 0.3 | 0.0038% |
| t-Butyl Per-2-ethylhexanoate (97%) | 24.44 | 97% | 23.7 | 0.36% |
| DI Water (Rinse) | 97.5 | | | |
| Co-feed Catalyst | | | | |
| t-Butyl Hydroperoxide (70%) | 7.02 | 70% | | 0.074% |
| DI Water | 474.5 | | | |
| DI Water (rinse) | 50 | | | |
| Co-feed Activator | | | | |
| IAA | 3.58 | 100.0% | 3.6 | 0.06% |

(continued)

| Co-feed Activator | | | | |
|---|---|---|---|---|
| DI Water | 474.5 | | | |
| DI Water Rinse) | 50.0 | | | |
| ME II | | | | |
| DI Water | 321.75 | | | |
| Sodium Dodecylbenzensulfonate (23%) | 16.15 | 23.0% | 3.7 | 0.06% |
| MMA | 1229 | 100.0% | 1228.5 | 95.9% |
| EA | 53.17 | 100.0% | 53.2 | 4.1% |
| DI Water Rinse) | 97.5 | | | |
| Stage II Promoter | | | | |
| DI Water | 26.61 | | | |
| FeSO4.7H2O | 0.04 | 100% | 0.04 | 0.00057% |
| Versene | 0.02 | 100% | 0.02 | 0.00024% |
| Chaser Catalyst | | | | |
| t-Butyl Hydroperoxide (70%) | 9.26 | 70.0% | 6.5 | 0.098% |
| DI Water | 344.5 | | 0.0 | |
| DI Water Rinse | 50 | | | |
| Chaser Activator | | | | |
| IAA | 4.68 | 100.0% | 4.7 | 0.071% |
| DI Water | 344.5 | | | |
| DI Water Rinse | 50 | | | |

Procedure:

Added kettle charge to the reactor and heated to 78° C. Turned on agitation. Made up ME I as follows: Added surfactant and water to the ME tank. Slowly stirred in BA, added ALMA. At 78 °C, added seed and rinsed water. Started ME I feed at 116.43 g/min. Did not let temperature fall below 63°C. When 1510 grams of ME I had been fed (20% of ME I) stopped ME I and held 30 min. Cooled to 65 °C. While cooling made up the initiator emulsion. With the reactor at 65°C, added the initiator emulsion and watched for exotherm. After peak exotherm, allowed the reaction mixture temperature to increase to 83 °C over 10 min. while resuming ME I through CF equipped with rotor stator at 116.43 g/min. When ME I was complete, added rinse. Cooled to 78 °C. Made up ME II in the order listed. At 78 °C, added stage II promoter (pre-mixed before adding), started co-feed catalyst and activator at 9.5 g/min over 50 min. Started ME II at 37.7g /min. over 45 min. Maintained 78 °C reaction temperature. When ME II and co-feeds were complete, added rinses. Cooled to 65 °C. At 65 °C, started chaser catalyst and activator at 8.60g/ min. over 40 min. When the chaser catalyst and activator were complete cooled to 25 °C. Filtered to remove any agglomeration.

SAMPLE B. Formation of large particle size polymer not within the parameters of particulate polymer of this invention

Table B.1 Mixtures used in formation of SAMPLE B

| Material | Charges Wt. (g) | % Active | Solids Wt. | % Active BOM |
|---|---|---|---|---|
| Kettle Charge: | | | | |
| DI Water | 7618 | | | |

(continued)

| Seed | | | | |
|---|---|---|---|---|
| Oligomer seed Sample b | 66.5 | 33.0% | | 0.41% |
| DI Water (rinse) | 146.3 | | | |
| Monomer Emulsion I | | | | |
| DI Water | 2071.9 | | | |
| Sodium Dodecylbenzensulfonate (23%) | 80.8 | 23.0% | 18.6 | 0.35% |
| BA | 5139.8 | 100.0% | 5113.0 | 95.5% |
| ALMA | 214.2 | 100.0% | 214.2 | 4.0% |
| Di Water Rinse | 130.0 | | | |
| Initiator Emulsion | | | | |
| DI Water | 53.7 | 100.0% | | |
| Sodium Dodecylbenzensulfonate (23%) | 1.10 | 23.0% | 0.3 | 0.0038% |
| t-Butyl Per-2-ethylhexanoate (97%) | 24.44 | 97% | 23.7 | 0.36% |
| Di Water (Rinse) | 97.5 | | | |
| Co-feed Catalyst | | | | |
| t-Butyl Hydroperoxide (70%) | 7.02 | 70% | | 0.074% |
| Di Water | 474.5 | | | |
| DI Water (rinse) | 50 | | | |
| Co-feed Activator | | | | |
| IAA | 3.58 | 100.0% | 3.6 | 0.06% |
| DI Water | 474.5 | | | |
| Di Water Rinse) | 50.0 | | | |
| ME II | | | | |
| DI Water | 321.75 | | | |
| Sodium Dodecylbenzensulfonate (23%) | 16.15 | 23.0% | 3.7 | 0.06% |
| MMA | 1229 | 100.0% | 1228.5 | 95.9% |
| EA | 53.17 | 100.0% | 53.2 | 4.1% |
| Di Water Rinse) | 97.5 | | | |
| Stage II Promoter | | | | |
| DI Water | 26.61 | | | |
| $FeSO_4.7H_2O$ | 0.04 | 100% | 0.04 | 0.00057% |
| Versene | 0.02 | 100% | 0.02 | 0.00024% |
| Chaser Catalyst | | | | |
| tBHP (70%) | 9.26 | 70.0% | 6.5 | 0.098% |
| DI water | 344.5 | | 0.0 | |
| DI Water Rinse | 50 | | | |
| Chaser Activator | | | | |
| IAA | 4.68 | 100.0% | 4.7 | 0.071% |
| Di water | 344.5 | | | |

(continued)

| Chaser Activator | | | | |
|---|---|---|---|---|
| DI Water Rinse | 50 | | | |

Procedure:

Added kettle charge to the reactor and heated to 78° C and turned on agitation. Made up ME I as follows: Added surfactant and water to the ME tank. Slowly stirred in BA and ALMA. At 78 °C, added seed and rinse water. Started ME I at 116.43 g/min. Did not let temperature go below 63°C. When 1510 grams of ME I had been fed (20% of ME I) stopped ME I and held 30 min. Cooled to 65 °C. While cooling made up the initiator emulsion. With the reactor at 65°C added the initiator emulsion and watched for exotherm. After peak exotherm, allowed the reaction mixture temperature to increase to 83 °C over 10 min. while resuming ME I feed. When ME I was complete, added rinse. Cooled to 78 °C. Made up ME II in the order listed. At 78 °C, added stage II promoter (pre-mixed before adding) started co-feed catalyst and activator at 9.49 g/min over 50 min. Started ME II at 37.7g /min. over 45 min. Maintained 78 °C reaction temperature. When ME II and co-feeds were complete added rinses. Cooled to 65 °C. At 65 °C, started chaser catalyst and activator at 8.60g/ min. over 40 min. When the chaser catalyst and activator were complete cooled to 25 °C. Filtered to remove any agglomeration.

SAMPLE C. Formation of large particle size polymer not within the parameters of particulate polymer of this invention

Table C.1 Mixtures used in formation of Sample C

| Material | Charges Wt. (g) | % Active | Solids Wt. | % Active BOM |
|---|---|---|---|---|
| Kettle Charge: | | | | |
| DI Water | 7618 | | | |
| Seed | | | | |
| Oligomer seed Sample b | 66.5 | 33.0% | | 0.41% |
| DI Water (rinse) | 146.3 | | | |
| Monomer Emulsion I | | | | |
| DI Water | 2071.9 | | | |
| Sodium Dodecylbenzensulfonate (23%) | 80.8 | 23.0% | 18.6 | 0.35% |
| BA | 5139.8 | 100.0% | 5113.0 | 95.5% |
| ALMA | 214.2 | 100.0% | 214.2 | 4.0% |
| DI Water Rinse | 130.0 | | | |
| Initiator Emulsion | | | | |
| DI Water | 53.7 | 100.0% | | |
| Sodium Dodecylbenzensulfonate (23%) | 1.10 | 23.0% | 0.3 | 0.0038% |
| t-Butyl Per-2-ethylhexanoate (97%) | 24.44 | 97% | 23.7 | 0.36% |
| Di Water (Rinse) | 97.5 | | | |
| Co-feed Catalyst | | | | |
| t BHP (70%) | 7.02 | 70% | | 0.074% |
| DI Water | 474.5 | | | |
| DI Water (rinse) | 50 | | | |
| Co-feed Activator | | | | |
| SSF | 2.04 | 100.0% | 3.6 | 0.06% |

(continued)

| Co-feed Activator | | | | |
|---|---|---|---|---|
| DI Water | 474.5 | | | |
| DI Water Rinse) | 50.0 | | | |
| ME II | | | | |
| DI Water | 321.75 | | | |
| Sodium Dodecylbenzensulfonate (23%) | 16.15 | 23.0% | 3.7 | 0.06% |
| MMA | 1229 | 100.0% | 1228.5 | 95.9% |
| EA | 53.17 | 100.0% | 53.2 | 4.1% |
| DI Water Rinse) | 97.5 | | | |
| Stage II Promoter | | | | |
| DI Water | 26.61 | | | |
| FeSO4.7H2O | 0.04 | 100% | 0.0 | 0.00057% |
| Versene | 0.02 | 100% | 0.02 | 0.00024% |
| Chaser Catalyst | | | | |
| tBHP (70%) | 9.26 | 70.0% | 6.5 | 0.098% |
| DI water | 344.5 | | 0.0 | |
| DI Water Rinse | 50 | | | |
| Chaser Activator | | | | |
| SSF | 3.34 | 100.0% | 4.7 | 0.071% |
| DI water | 344.5 | | | |
| DI Water Rinse | 50 | | | |

Procedure:

Added kettle charge to the reactor and heated to 78° C and turned on agitation. Made up ME I as follows: Added surfactant and water to the ME tank. Slowly stirred in BA and ALMA. At 78 °C, added seed and rinse water. Started ME I at 116.43 g/min. Did not let temperature go below 63°C. When 1510 grams of ME I had been fed (20% of ME I) stopped ME I and held 30 min. Cooled to 65 °C. While cooling, made up the initiator emulsion. With the reactor at 65°C added the initiator emulsion and watched for exotherm. After peak exotherm, allowed the reaction mixture temperature to increase to 83 °C over 10 min. while resuming ME I feed. When ME I was complete, added rinse. Cooled to 78 °C. Made up ME II in the order listed. At 78 °C, added stage II promoter (pre-mixed before adding) started co-feed catalyst and activator at 9.49 g/min over 50 min. Started ME II at 37.7g /min. over 45 min. Maintained 78 °C reaction temperature. When ME II and co-feeds were complete added rinses. Cooled to 65 °C. At 65 °C, started chaser catalyst and activator at 8.60g/ min. over 40 min. When the chaser catalyst and activator were complete cooled to 25 °C. Filtered to remove any agglomeration.

SAMPLE D. Formation of large particle size polymer not within the parameters of particulate polymer of this invention

Table D.1 Mixtures used in formation of SAMPLE D

| Material | Charges Wt. (g) | % Active | Solids Wt. | % Active BOM |
|---|---|---|---|---|
| Kettle Charge: | | | | |
| DI Water | 7618 | | | |
| Seed | | | | |

(continued)

| Material | Charges Wt. (g) | % Active | Solids Wt. | % Active BOM |
|---|---|---|---|---|
| Kettle Charge: | | | | |
| Oligomer seed Sample b | 66.5 | 33.0% | | 0.41% |
| DI Water (rinse) | 146.3 | | | |
| Monomer Emulsion I | | | | |
| DI Water | 2071.9 | | | |
| Sodium Dodecylbenzensulfonate (23%) | 80.8 | 23.0% | 18.6 | 0.35% |
| BA | 5113.0 | 100.0% | 5113.0 | 95.5% |
| α-Methylstyrene | 26.8 | 100.0% | 26.8 | 0.5% |
| ALMA | 214.2 | 100.0% | 214.2 | 4.0% |
| Di Water Rinse | 130.0 | | | |
| Initiator Emulsion | | | | |
| DI Water | 53.7 | 100.0% | | |
| Sodium Dodecylbenzensulfonate (23%) | 1.10 | 23.0% | 0.3 | 0.0038% |
| t-Butyl Per-2-ethylhexanoate (97%) | 24.44 | 97% | 23.7 | 0.36% |
| Di Water (Rinse) | 97.5 | | | |
| Co-feed Catalyst | | | | |
| t BHP (70%) | 7.02 | 70% | | 0.074% |
| DI Water | 474.5 | | | |
| DI Water (rinse) | 50 | | | |
| Co-feed Activator | | | | |
| SSF | 2.04 | 100.0% | 3.6 | 0.06% |
| DI Water | 474.5 | | | |
| DI Water Rinse) | 50.0 | | | |
| ME II | | | | |
| DI Water | 321.75 | | | |
| Sodium | 16.15 | 23.0% | 3.7 | 0.06% |
| MMA | 1229 | 100.0% | 1228.5 | 95.9% |
| EA | 53.17 | 100.0% | 53.2 | 4.1% |
| DI Water Rinse) | 97.5 | | | |
| Stage II Promoter | | | | |
| DI Water | 26.61 | | | |
| FeSO4.7H2O | 0.04 | 100% | 0.0 | 0.00057% |
| Versene | 0.02 | 100% | 0.02 | 0.00024% |
| Chaser Catalyst | | | | |
| tBHP (70%) | 9.26 | 70.0% | 6.5 | 0.098% |
| DI water | 344.5 | | 0.0 | |
| DI Water Rinse | 50 | | | |

(continued)

| Chaser Activator | | | | |
|---|---|---|---|---|
| SSF | 3.34 | 100.0% | 4.7 | 0.071% |
| DI water | 344.5 | | | |
| DI Water Rinse | 50 | | | |

Procedure:

Added kettle charge to the reactor and heated to 78° C and turned on agitation. Made up ME I as follows: Added surfactant and water to the ME tank. Slowly stirred in BA and ALMA. At 78 °C, added seed and rinse water. Started ME I at 116.43 g/min. Did not let temperature go below 63°C. When 1510 grams of ME I had been fed (20% of ME I) stopped ME I and held 30 min. Cooled to 65 °C. While cooling made up the initiator emulsion. With the reactor at 65°C added the initiator emulsion and watched for exotherm. After peak exotherm, allowed the reaction mixture temperature to increase to 83 °C over 10 min. while resuming ME I feed. When ME I was complete, added rinse. Cooled to 78 °C. Made up ME II in the order listed. At 78 °C, added stage II promoter (pre-mixed before adding) started co-feed catalyst and activator at 9.49 g/min over 50 min. Started ME II at 37.7g /min. over 45 min. Maintained 78 °C reaction temperature. When ME II and co-feeds were complete added rinses. Cooled to 65 °C. At 65 °C, started chaser catalyst and activator at 8.60g/ min. over 40 min. When the chaser catalyst and activator were complete cooled to 25 °C. Filtered to remove any agglomeration.

Characterization of Samples A- D

| | Sample A | Sample B | Sample C | Sample D |
|---|---|---|---|---|
| Hansch=2-10 monomer | 0.5% AMS | 0 | 0 | 0.5% AMS |
| Activator | IAA | IAA | SSF | SSF |
| DCP PS (microns) | 4.478 | 4.617 | 4.466 | 4.661 |
| DCP (wt.%) | 83.2 | 96.7 | 91.2 | 81.1 |

EXAMPLE 1 and COMPARATIVE EXAMPLES A-C Formation of thickened aqueous compositions from Samples A-D

Aqueous compositions Example 1 and Comparative Examples A-C were prepared from Samples A-D, respectively using a 0.45 kg (16 ounce) plastic paint container. The materials, as detailed in Table 18.1, were added in the order provided while mixing using a 3 pitch blade mechanical mixer. After all materials were added the mixture was stirred for 5 minutes. LAPONITE™ RD solution was prepared by adding 5.4 g LAPONITE™ RD to 194.6 g DI water and mixing for 1 hour prior to use.

EXAMPLES 2-3 and COMPARATIVE EXAMPLES D-I. Aqueous compositions of the invention Examples 3-4 and Comparative Examples D-I formed according to the teachings of Example 1 using a partially associative HASE thickener and their evaluation

Table 2.1 Compositions including a partially associative HASE thickener

| Example | Comp. Ex.D | Comp. Ex.E | Comp. Ex.F | Comp. Ex.G | Comp. Ex.H | Comp. Ex.I | Ex. 2 | Ex. 3 |
|---|---|---|---|---|---|---|---|---|
| Particulate polymer | Sample C | Sample C | Sample D | Sample D | Sample B | Sample B | Sample A | Sample A |
| Particulate polymer (solids) | 33.0 | 33.0 | 33.0 | 33.0 | 33.5 | 33.5 | 34.1 | 34.1 |

(continued)

| Example | Comp. Ex.D | Comp. Ex.E | Comp. Ex.F | Comp. Ex.G | Comp. Ex.H | Comp. Ex.I | Ex. 2 | Ex. 3 |
|---|---|---|---|---|---|---|---|---|
| Particulate polymer (g) | 450.0 | 450.0 | 450.0 | 450.0 | 443.0 | 443.0 | 435.5 | 435.5 |
| Water (g) | 0 | 0 | 0 | 0 | 7 | 7 | 14.5 | 14.5 |
| ACRYSOL™ DR-1 thickener | 2.26 | 2.95 | 2.26 | 2.95 | 2.26 | 2.95 | 2.26 | 2.95 |
| AMP-95 (g) | 0.50 | 0.70 | 0.60 | 0.69 | 0.53 | 0.66 | 0.58 | 0.68 |
| pH of mixture Brookfield viscosity of mix. | 8.89 | 9.14 | 8.95 | 8.95 | 8.84 | 8.97 | 8.89 | 8.88 |
| Spindle 1 3RPM | 78 | 334 | 108 | 360 | 106 | 450 | 140 | 624 |
| Spindle 1 12 RPM | 56 | 190 | 62 | 210 | 78 | 252 | 110 | 455 |
| After heat aging 10 days 60°C | | | | | | | | |
| Syneresis | 4.5/11.5 | 4.5/11.5 | 2/11 | 3/11 | 4/11 | 4.5/11 | 1/11 | 0/11 |
| Sedimentation | 2 | 2 | 3 | 3.5 | 2 | 2.5 | 5 | 5 |
| Type of sediment | Hard | Hard | Soft | Soft | Hard | Hard | None | none |
| AMP-95=2-Amino -2- methyl-1-propanol (95%) | | | | | | | | |

The aqueous compositions, Examples 2-3, of the present invention provide improved sediment, syneresis relative to the corresponding aqueous compositions, Comparative Examples D-I.

EXAMPLES 4-6. Aqueous compositions of the invention using various levels of an associative thickener and their evaluation

Table 4.1 Aqueous compositions using an associative thickener

| Example | 4 | 5 | 6 |
|---|---|---|---|
| Sample A | 400 | 400 | 400 |
| LAPONITE™ RD (2.7% solution) | 45 | 45 | 45 |
| AMP-95 | 0.15 | 0.15 | 0.18 |
| ACRYSOL™ RM-8w | 8 | 13 | 18.2 |
| pH adjustment AMP-95 | 0.1 | 0.1 | 0.05 |
| total | 453.15 | 458.15 | 463.38 |
| final pH | 9.2 | 9.3 | 9.1 |
| Equilibrated 1day HS BF Spindle1 3RPM/12RPM | 430/159 | 270/120 | 730/320r |
| HA 10 days 60c | | | |
| Syneresis | 2.5/11 | 2.5/11 | 2.5/11 |
| Sedimentation | 5 | 5 | 5 |

EXAMPLES 7-8. Aqueous compositions of the invention using various levels of a non-associative thickener and their evaluation

Table 7.1 Aqueous compositions using a non-associative thickener

| Example | | 7 | 8 |
|---|---|---|---|
| Sample A | | 400 | 400 |
| LAPONITE™ RD | | 45 | 92 |
| (2.7% solution) | | | |
| AMP-95 | | 0.16 | 0.13 |
| total | | 445.16 | 492.13 |
| pH after AMP-95 | | 8.73 | 8.74 |
| Equil 1 day HS | Spindle1 3/12 | 288/119 | 1234/420 |
| HA 10 days 60 | Syneresis | 0/11 | 0/11 |
| | Sedimentation | 5 | 5 |

EXAMPLES 9-12. Aqueous compositions of the invention using various levels of a polymeric non-associative thickener and their evaluation.

Table 9.1 Aqueous compositions using a polymeric non-associative thickener

| Example | 9 | 10 | 11 | 12 |
|---|---|---|---|---|
| Sample A | 332 | 405 | 405 | 405 |
| ACRYSOL™ ASE-60 | 1.7 | 3.3 | 4 | 6.2 |
| AMP-95 | 0.44 | 0.67 | 0.78 | 1 |
| Total | 334.14 | 408.97 | 409.78 | 412.2 |
| initial pH | 9.05 | 9.01 | 9.07 | 8.66 |
| Equilibrated BF 1 days HS | | | | |
| Spindle1 3/12 | settled overnight | 74/52 | 166/99 | 1550/640 |
| 10d HA60°C | | | | |
| Syneresis | | 0/11 | 0/11 | 0/11 |
| Sediment | | 2 | 2 | 4.5 |
| Emulsion gel | | Hard | Hard | None |

EXAMPLES 13-16. Aqueous compositions of the invention using various levels of a polymeric non-associative thickener/inorganic thickener combination and their evaluation

Table 13.1 Aqueous compositions using a polymeric non-associative thickener /inorganic thickener combination

| Example | 13 | 14 | 15 | 16 |
|---|---|---|---|---|
| Sample A | 405 | 405 | 405 | 405 |
| ACRYSOL™ ASE-60 | | 2.1 | 3.2 | 4.0 |

(continued)

| Example | 13 | 14 | 15 | 16 |
|---|---|---|---|---|
| 2.7% LAPONITE™ RD solution | 45 | 45 | 45 | 45 |
| Total | 450 | 452.1 | 453.2 | 454 |
| AMP-95 | 0.15 | 0.48 | 0.63 | 0.75 |
| pH | 8.57 | 8.73 | 8.75 | 8.9 |
| Spindle#2 3RPM/12RPM | 320/110 | 320/125 | 930/390 | 1430/570 |
| Heat age 10 days 60C | | | | |
| Syneresis | 1/11 | 1/11 | 0/11 | 0/11 |
| Sediment | 5 | 5 | 5 | 5 |

EXAMPLE 17 and COMPARATIVE EXAMPLE J. Use of particulate polymer and thickened particulate polymer in a clear matt coating useful as a topcoat over pigmented wall paint.

The samples were prepared in a 0.23 kg (8 ounce) plastic paint container. The materials were added in the order provided while mixing using a 3 pitch blade mechanical mixer. After all materials were added the mixture was stirred for an additional 5 minutes. LAPONITE™ RD solution was prepared in advance by adding 5.4g LAPONITE™ RD to 194.6g DI water and mixing for 1 hour prior to use. The viscosity of the coatings were measured using a Krebs viscometer and are reported in Krebs units. After preparation, the samples were drawn down using a 76.2 $\mu$m (3mil) bird applicator over a Penopec 1B chart (Leneta company). After drying for at least 16 hours at ambient conditions, gloss was measured in triplicate at 60 degree and 85 degree specular gloss using a Micro-TRI-Gloss meter (Byk-Gardner GmbH, catalogue number 4448).

Table 18.1 Formation and Evaluation of topcoat samples.

| Example | | Comp. Example J | Example 17 |
|---|---|---|---|
| | | Grams | grams |
| Unthickened Sample A | | 105.5 | |
| Thickened Example 13 | | | 105.5 |
| 2.7% LAPONITE™ RD solution | | 8.4 | 8.4 |
| RHOPLEX™ VSR-50 | | 74.3 | 74.3 |
| BYK-028 | | 0.1 | 0.1 |
| TEXANOL™ | | 1.7 | 1.7 |
| ACRYSOL ™ RM-2020 | | 1.8 | 1.8 |
| amp-95 | | 0.12 | 0.09 |
| water | | 19.3 | 19.3 |
| ACRYSOL™ RM-8w | | 3.3 | 2.4 |
| water | | 0.6 | 1.5 |
| total | | 215.1 | 215.1 |
| pH | | 8.42 | 8.48 |
| Initial KU Viscosity | | 103 | 106 |
| Gloss of dried coating (76.2 $\mu$m (3mil) bird applicator, black section of Penopac 1B Leneta chart) | 60°/85° | 1.7/14.1 | 1.3/10.5 |

(continued)

| Example | | Comp. Example J | Example 17 |
|---|---|---|---|
| | | Grams | grams |
| Gloss of dried coating (76.2 $\mu$m (3mil) bird applicator, black section of Penopac 1B Leneta chart) | | 3.3/14.1 | 3.1/10.0 |
| ACRYSOL™ and RHOPLEX™ are trademarks of The Dow Chemical Company; TEXANOL™ is a trademark of Eastman Chemical Company | | | |

**Claims**

1. An aqueous composition comprising:

   a particulate polymer having a particle diameter of from 0.7 microns to 100 microns, said particle diameter being measured using a Disc Centrifuge Photosedimentometer relative to a polystyrene calibration standard for particle diameters of from 0.5 microns to 30 microns or using a Coulter counter for particle diameters of from greater than 30 microns to 150 microns, said polymer comprising, as copolymerized units, from 0.1% to 50%, by weight based on said polymer weight, monomer having a Hansch parameter calculated from the US EPA Kowwin software of from 2.5 to 10, said polymer having been formed in the presence of a non-formaldehyde reductant; and from 0.1% to 5%, by weight based on polymer weight, thickener.

2. The aqueous composition of claim 1 wherein the particulate polymer has a particle diameter of from 0.7 microns to 50 microns.

3. The aqueous composition of claim 2 wherein the particulate polymer has a particle diameter of from 0.8 microns to 20 microns.

4. The aqueous composition of claim 1 wherein said non-formaldehyde reductant is from 0.01% to 0.5%, by weight based on said polymer weight, isoascorbic acid.

5. The aqueous composition of claim 1 wherein said particulate polymer has been formed by an emulsion polymerization process, a seeded growth process or a suspension polymerization process.

6. The aqueous composition of claim 1 wherein said particulate polymer has been formed by a single stage process or a multiple stage process.

7. The aqueous composition of claim 1 wherein said thickener is selected from the group consisting of associative thickeners, partially associative thickeners, and non-associative thickeners, and mixtures thereof.

8. The aqueous composition of claim 1 further comprising a clay thickener.

9. The aqueous composition of claim 1 further comprising solid inorganic particles.

10. The aqueous composition of any of claims 1-9 further comprising an emulsion polymer or a polyurethane dispersion having a calculated Tg of from -60°C to 150°C and a particle diameter of from 50 nm to 490 nm.

11. A method for providing a coated substrate comprising

    (a) forming the aqueous composition of any of claims 1-9;
    (b) applying said aqueous composition to a substrate; and
    (c) drying, or allowing to dry, said applied aqueous composition.

12. A coated substrate formed by the method of claim 11.

**Patentansprüche**

1. Eine wässrige Zusammensetzung, die Folgendes beinhaltet:

   ein partikelförmiges Polymer mit einem Partikeldurchmesser von 0,7 Mikrometer bis 100 Mikrometer, wobei der Partikeldurchmesser unter Verwendung eines Tellerzentrifugen-Photosedimentometers relativ zu einem Polystyrol-Kalibrierstandard für Partikeldurchmesser von 0,5 Mikrometer bis 30 Mikrometer oder unter Verwendung eines Coulter-Zählers für Partikeldurchmesser von mehr als 30 Mikrometer bis 150 Mikrometer gemessen wird, wobei das Polymer, als copolymerisierte Einheiten, zu 0,1 Gew.-% bis 50 Gew.-%, bezogen auf das Gewicht des Polymers, Monomer mit einem Hansch-Parameter, berechnet aus der US-EPA-Kowwin-Software, von 2,5 bis 10 beinhaltet, wobei das Polymer in Gegenwart eines Nicht-Formaldehyd-Reduktionsmittels gebildet worden ist; und
   bezogen auf das Gewicht des Polymers, zu 0,1 Gew.-% bis 5 Gew.-% Verdickungsmittel.

2. Wässrige Zusammensetzung gemäß Anspruch 1, wobei das partikelförmige Polymer einen Partikeldurchmesser von 0,7 Mikrometer bis 50 Mikrometer aufweist.

3. Wässrige Zusammensetzung gemäß Anspruch 2, wobei das partikelförmige Polymer einen Partikeldurchmesser von 0,8 Mikrometer bis 20 Mikrometer aufweist.

4. Wässrige Zusammensetzung gemäß Anspruch 1, wobei das Nicht-Formaldehyd-Reduktionsmittel, bezogen auf das Gewicht des Polymers, zu 0,01 Gew.-% bis 0,5 Gew.-% Isoascorbinsäure ist.

5. Wässrige Zusammensetzung gemäß Anspruch 1, wobei das partikelförmige Polymer durch ein Emulsionspolymerisationsverfahren, ein Keimwachstumsverfahren oder ein Suspensionspolymerisationsverfahren gebildet worden ist.

6. Wässrige Zusammensetzung gemäß Anspruch 1, wobei das partikelförmige Polymer durch ein einstufiges Verfahren oder ein mehrstufiges Verfahren gebildet worden ist.

7. Wässrige Zusammensetzung gemäß Anspruch 1, wobei das Verdickungsmittel aus der Gruppe ausgewählt ist, die aus assoziativen Verdickungsmitteln, teilweise assoziativen Verdickungsmitteln und nicht assoziativen Verdickungsmitteln und Mischungen davon besteht.

8. Wässrige Zusammensetzung gemäß Anspruch 1, die ferner ein Ton-Verdickungsmittel beinhaltet.

9. Wässrige Zusammensetzung gemäß Anspruch 1, die ferner feste anorganische Partikel beinhaltet.

10. Wässrige Zusammensetzung gemäß einem der Ansprüche 1-9, die ferner ein Emulsionspolymer oder eine Polyurethandispersion mit einer berechneten Tg von -60 °C bis 150 °C und einem Partikeldurchmesser von 50 nm bis 490 nm beinhaltet.

11. Ein Verfahren zum Bereitstellen eines beschichteten Substrats, das Folgendes beinhaltet:

    (a) Bilden der wässrigen Zusammensetzung gemäß einem der Ansprüche 1-9;
    (b) Aufbringen der wässrigen Zusammensetzung auf ein Substrat; und
    (c) Trocknen, oder Zulassen des Trocknens, der aufgebrachten wässrigen Zusammensetzung.

12. Ein beschichtetes Substrat, gebildet durch das Verfahren gemäß Anspruch 11.

**Revendications**

1. Une composition aqueuse comprenant :

   un polymère en particules ayant un diamètre de particule allant de 0,7 micron à 100 microns, ledit diamètre de particule étant mesuré à l'aide d'un photosédimentomètre séparateur centrifuge à disques relativement à une norme d'étalonnage de polystyrène pour des diamètres de particule allant de 0,5 micron à 30 microns ou à l'aide d'un compteur de Coulter pour des diamètres de particule allant de plus de 30 microns à 150 microns, ledit polymère comprenant, en tant qu'unités copolymérisées, de 0,1 % à 50 %, en poids rapporté au poids dudit polymère, de monomère ayant un paramètre de Hansch calculé à partir du logiciel US EPA Kowwin allant de 2,5 à 10, ledit polymère ayant été formé en présence d'un réducteur non formaldéhyde ; et de 0,1 % à 5 %, en poids rapporté au poids du polymère, d'un épaississant.

2. La composition aqueuse de la revendication 1 dans laquelle le polymère en particules a un diamètre de particule allant de 0,7 micron à 50 microns.

3. La composition aqueuse de la revendication 2 dans laquelle le polymère en particules a un diamètre de particule allant de 0,8 micron à 20 microns.

4. La composition aqueuse de la revendication 1 dans laquelle ledit réducteur non formaldéhyde constitue de 0,01 % à 0,5 %, en poids rapporté au poids dudit polymère, d'acide isoascorbique.

5. La composition aqueuse de la revendication 1 dans laquelle ledit polymère en particules a été formé par un processus de polymérisation en émulsion, un processus de croissance ensemencée ou un processus de polymérisation en suspension.

6. La composition aqueuse de la revendication 1 dans laquelle ledit polymère en particules a été formé par un processus à étape unique ou un processus à étapes multiples.

7. La composition aqueuse de la revendication 1 dans laquelle ledit épaississant est sélectionné dans le groupe constitué d'épaississants associatifs, d'épaississants en partie associatifs, et d'épaississants non associatifs, et de mélanges de ceux-ci.

8. La composition aqueuse de la revendication 1 comprenant en outre un épaississant à l'argile.

9. La composition aqueuse de la revendication 1 comprenant en outre des particules inorganiques solides.

10. La composition aqueuse de n'importe lesquelles des revendications 1 à 9 comprenant en outre un polymère en émulsion ou une dispersion de polyuréthane ayant une Tg calculée allant de -60 °C à 150 °C et un diamètre de particule allant de 50 nm à 490 nm.

11. Un procédé pour fournir un substrat revêtu comprenant

(a) la formation de la composition aqueuse de n'importe lesquelles des revendications 1 à 9 ;
(b) l'application de ladite composition aqueuse sur un substrat ; et
(c) le séchage, ou le fait de laisser sécher, ladite composition aqueuse appliquée.

12. Un substrat revêtu formé par le procédé de la revendication 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1754730 A1
- EP 2338613 A1
- US 7829626 B
- US 4403003 A
- US 7768602 B
- US 5162415 A

**Non-patent literature cited in the description**

- **GK BATCHELOR.** Introduction to Fluid Dynamics. Cambridge University press, 1967
- **HANSCH ; FUJITA.** *J. Amer. Chem. Soc.,* 1964, vol. 86, 1616-1626
- **H. KUBINYI et al.** Methods and Principles of Medicinal Chemistry. VCH, 1993, vol. 1
- **C. HANSCH ; A. LEO.** Substituent Constants for Correlation Analysis in Chemistry and Biology. Wiley, 1979
- **C. HANSCH ; P. MALONEY ; T. FUJITA ; R. MUIR.** *Nature,* 1962, vol. 194, 178-180
- **T.G. FOX.** *Bull. Am. Physics Soc.,* 1956, vol. 1 (3), 123
- Polymer Handbook. Interscience Publishers